# EUROPEAN PATENT APPLICATION

(11) **EP 1 905 378 A2**
(43) Date of publication of application: **02.04.2008**
(21) Application number: 07018634.1
(22) Date of filing: 21.09.2007
(51) Int. Cl.: A61C 8/00

(54) **Abutment for dental implant fixture**

(30) Priority: 27.09.2006 JP 2006262400
(71) Applicant: GC Corporation, Tokyo 174-8585 (JP)
(72) Inventor: Yamashita, Tsunehiko, Suita-city Osaka (JP); Takayama, Masayuki, Tokyo 174-8585 (JP); Sakamoto, Yuki, Tokyo 174-8585 (JP); Aoyagi, Shuji, Tokyo 174-8585 (JP); Noguchi, Yusuke, Tokyo 174-8585 (JP); Yoshinaga, Masatoshi, Tokyo 174-8585 (JP)
(74) Representative: Müller-Boré & Partner Patentanwälte

(57) **Abstract**

To improve gingival sealing property without decreasing aesthetic property, an abutment coping 3 for a dental implant fixture has a male screw 2a engaged to a female screw 1a formed at the intra-oral side of a dental implant fixture 1, and is cylindrically or taperedly projected at the intra-oral side of the fixture 1, and an end part of the abutment coping 3 at the fixture 1 side is made of a white ceramic and fixed at the abutment 2 so as to expose an outer peripheral surface of the abutment 2 from a part between the end part and the intra-oral side surface of the fixture 1, or to have a clearance G being 1.3 mm or less and starting from an outer peripheral surface of the abutment 2 at a part between the end part and the intra-oral side surface of the fixture 1.

## Description

The present invention relates to an abutment coping (inner cap) used when producing a composite crown as a dental prosthesis fixed at a dental implant fixture in a dental implant treatment to recover a lost oral function of a missing tooth part, and an abutment coping for a dental implant fixture capable of having good sealing property of a gingiva and not decreasing aesthetic property.

As a treatment to recover a lost oral function of a missing tooth part, a dental implant treatment, in which a dental prosthesis is fixed at the intra-oral side of a dental implant fixture embedded in a jawbone of a missing tooth part and osseously bound with the jawbone, has been used. This conventional dental implant treatment has generally a structure in which an abutment is provided at the intra-oral side of a dental implant fixture as a member contacting to a gingival part, and a dental prosthesis is provided on the intra-oral side of the abutment, where the member has a truncated conical part expanded from an outer peripheral surface of the intra-oral side end of the dental implant fixture, and has a cylindrical part following the conical part and having the same diameter as that of the conical part (for example, refer to Fig. 8 of Japanese Patent Application Laid Open No. 9-238956, and Fig. 5 of Japanese Patent Application Laid Open No. 2001-17448).

However, in an implant system having the above-described structure, plurality of abutments corresponding to the thicknesses of gingival parts of patients are necessarily prepared. Further, an intra-oral side surface of the abutment is a plane rectangular with respect to an axis of a dental implant fixture, and a gingival part has an interdental papilla upwardly rising at the intra-oral side between adjacent teeth. However, since the existence of the interdental papilla has not been considered in general, a surface at the intra-oral side of an abutment is exposed between the interdental papillae, so that aesthetic property decreases. Furthermore, since a surface from a dental prosthesis provided at the most intra-oral side to a dental implant fixture through an abutment is gradually reduced, saliva or bacteria is easily invaded into the dental implant fixture along the abutment from the inside of an oral cavity, and thus an implant body may be finally dropped due to making a hotbed of invaded bacteria or saliva.

A primary objective of the present invention is to provide such an abutment coping for a dental implant fixture used when producing a composite crown as a dental prosthesis fixed at a dental implant fixture, that invading of saliva or bacteria into a dental implant fixture can be prevented, and aesthetic property can be kept without being lost by exposure of a material different from a dental prosthesis such as a metallic abutment, at the gingival side during a period before recovery of a gingiva to the healthy state, between interdental papillae, or at the gingival side at the time of peeling of a gingiva.

The earnest work was carried out in order to solve the above-mentioned problems and, as a result of this, the followings were found out to complete the present invention. A dental prosthesis fixed at a dental implant fixture is made into a composite crown. An abutment used as a member to which a dental prosthesis is attached and fixed, has a structure that a male screw of the abutment is screwed to a female screw formed at the intra-oral side of a dental implant fixture and the abutment is cylindrically projected or taperedly projected at the intra-oral side of the dental implant fixture. Further, an abutment coping for a dental implant fixture used as an internally attached crown of the composite crown has an end part made of a white ceramic at the dental implant fixture side, where the end part made of a white ceramic is fixed at an abutment so as to expose an outer peripheral surface of the abutment from a part between the end part and the intra-oral side surface of the dental implant fixture, or have a clearance being 1.3 mm or less and starting from an outer peripheral surface of the abutment at a part between the end part and the intra-oral side surface of the dental implant fixture.

That is, the present invention relates to an abutment coping for a dental implant fixture, with the structure that the abutment coping is attached and fixed to an abutment having a male screw engaged to a female screw formed at the intra-oral side of a dental implant fixture, and being cylindrically or taperedly projected at the intra-oral side of the dental implant fixture, wherein an end part of the abutment coping at the dental implant fixture side is made of a white ceramic, and is fixed at the abutment so as to expose an outer peripheral surface of the abutment at a part between the end part and the intra-oral side surface of the dental implant fixture, or to have a clearance being 1.3 mm or less and starting from an outer peripheral surface of the abutment at a part between the end part and the intra-oral side surface of the dental implant fixture.

Further, the abutment coping for a dental implant fixture has preferably a portion to be a margin line for a dental externally attached crown at the intra-oral side, which is apart from the intra-oral side surface of a dental implant fixture by a distance corresponding to a gingiva.

As for the abutment coping for a dental implant fixture according to the present invention, since an end part of the dental implant fixture side is fixed at an abutment so as to expose an outer peripheral surface of the abutment at a part between the end part and the intra-oral side surface of the dental implant fixture or to have a clearance being 1.3 mm or less and starting from an outer peripheral surface of the abutment at a part between the end part and the intra-oral side surface of the dental implant fixture, a gingiva enters into the clearance, so that invading of saliva or bacteria into a dental implant fixture can be prevented, and aesthetic property can be kept without being lost by exposure of a material different from a dental prosthesis such as a metallic abutment, at the gingival side during a period before recovery of a gingiva to the healthy state, between interdental papillae, or at the gingival side at the time of peeling of a gingiva.

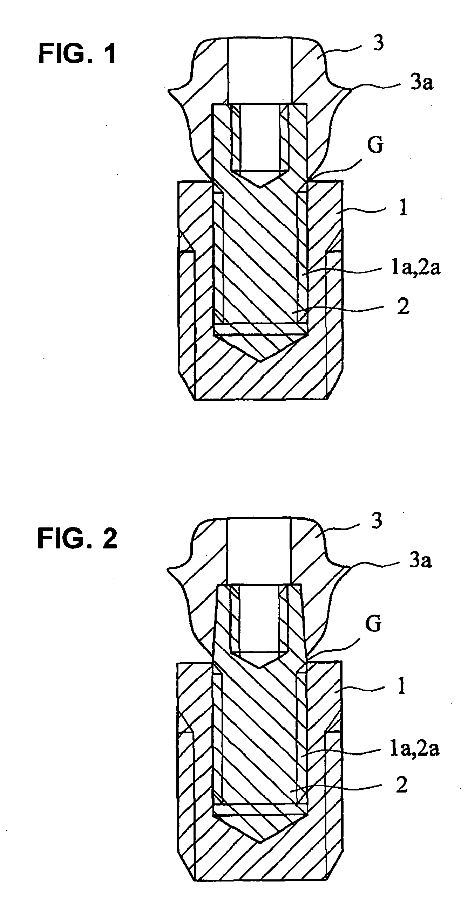

Fig. 1 is a longitudinal sectional explanatory view to illustrate one example of an abutment coping for a dental implant fixture according to the present invention, where a male screw of the abutment coping is engaged to a female screw formed at the intra-oral side of a dental implant fixture and the abutment is cylindrically projected at the intra-oral side of the dental implant fixture,

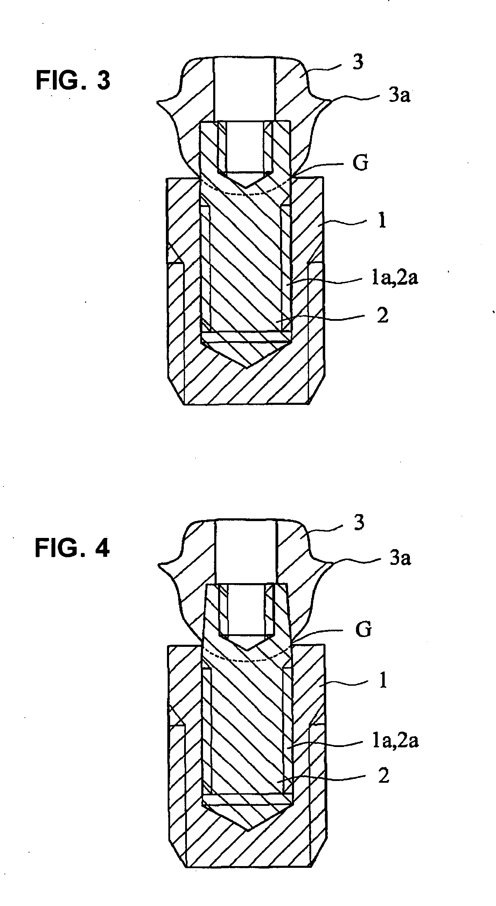

Fig. 2 is a longitudinal sectional explanatory view to illustrate another example of an abutment coping for a dental implant fixture according to the present invention, where a male screw of the abutment coping is engaged to a female screw formed at the intra-oral side of a dental implant fixture and the abutment is taperedlyprojected at the intra-oral side of the dental implant fixture,
Fig. 3 is a longitudinal sectional explanatory view to illustrate another example of an abutment coping for a dental implant fixture according to the present invention, where a male screw of the abutment coping is engaged to a female screw formed at the intra-oral side of a dental implant fixture having a scallop structure and the abutment is cylindrically projected at the intra-oral side of the dental implant fixture, and
Fig. 4 is a longitudinal sectional explanatory view to illustrate another example of an abutment coping for a dental implant fixture according to the present invention, where a male screw of the abutment coping is engaged to a female screw formed at the intra-oral side of a dental implant fixture having a scallop structure and the abutment is taperedly projected at the intra-oral side of the dental implant fixture.

Detailed explanation will be given below about the abutment coping for a dental implant fixture according to the present invention with reference to drawings.

Fig. 1 is a longitudinal sectional explanatory view to illustrate one example of an abutment coping for a dental implant fixture according to the present invention, where a male screw of the abutment is engaged to a female screw formed at the intra-oral side of a dental implant fixture and the abutment is cylindrically projected at the intra-oral side of the dental implant fixture. Fig. 2 is a longitudinal sectional explanatory view to illustrate another example of an abutment coping for a dental implant fixture according to the present invention, where a male screw of the abutment is engaged to a female screw formed at the intra-oral side of a dental implant fixture and the abutment is taperedly projected at the intra-oral side of the dental implant fixture. Fig. 3 is a longitudinal sectional explanatory view to illustrate another example of an abutment coping for a dental implant fixture according to the present invention, where a male screw of the abutment is engaged to a female screw formed at the intra-oral side of a dental implant fixture having a scallop structure and the abutment is cylindrically projected at the intra-oral side of the dental implant fixture. Fig. 4 is a longitudinal sectional explanatory view to illustrate another example of an abutment coping for a dental implant fixture according to the present invention, where a male screw of the abutment coping is engaged to a female screw formed at the intra-oral side of a dental implant fixture having a scallop structure and the abutment is taperedly projected at the intra-oral side of the dental implant fixture.

In these drawings, a dental implant fixture 1 is embedded in a jawbone of a missing tooth part and osseously bound with the jawbone so as to fix a dental prosthesis at the intra-oral side thereof in a dental implant treatment to recover a lost oral function of a missing tooth part. The dental implant fixture includes a female screw 1a to which an abutment 2 described below is engaged so as to be cylindrically or taperedly projected. Further, the intra-oral side surface of the dental implant fixture 1 may have a plane rectangular with respect to an axis of the dental implant fixture 1 as illustrated in Figs. 1 and 2. Further, as illustrated in Fig. 3 and Fig. 4, the intra-oral side surface may have a scallop structure as considering an interdental papilla upwardly rising at the intra-oral side between adjacent teeth, in which the scallop structure has a portion corresponding to the interdental papilla upwardly rising at the intra-oral side.

An abutment 2 is fixed by engaging a male screw 2a to the female screw 1a of the dental implant fixture 1 so that a cylindrical or tapered portion at the intra-oral side of the abutment 2 projects from the intra-oral side surface of the dental implant fixture 1. The abutment 2 is to fix a dental prosthesis at the portion projected from the intra-oral side surface of the dental implant fixture 1.

An abutment coping 3 for a dental implant fixture according to the present invention is an inner cap of a composite crown which is a dental prosthesis fixed at the portion projected from the intra-oral side surface of the dental implant fixture 1. An end part of the abutment coping 3 at the dental implant fixture 1 side is made of a white ceramic and fixed at the abutment 3 so as to expose an outer peripheral surface of the abutment 2 at a part between the end part of the abutment 2 and the intra-oral side surface of the dental implant fixture 1 or to have a clearance G at a part between the end part and the intra-oral side surface of the dental implant fixture 1, where the clearance is 1.3 mm or less and starts from an outer peripheral surface of the abutment 2.

Further, the abutment coping 3 for a dental implant fixture has preferably a portion to be a margin line 3a for a dental externally attached crown at the intra-oral side, which is apart from the intra-oral side surface of the dental implant fixture 1 by a distance corresponding to a gingiva.

When the abutment coping 3 for a dental implant fixture according to the present invention is used, the abutment coping 3 for a dental implant fixture is fixed on the abutment 2 so as to expose an outer peripheral surface of the abutment 2 at a part between the end part and the intra-oral side end surface of the dental implant fixture 1 as illustrated in Figs. 2 and 4, or to have a clearance G, which is 1.3 mm or less at the maximum and starts from an outer peripheral surface of the abutment 2, at a part between the end part and the intra-oral side end surface of the dental implant fixture 1 as illustrated in Figs. 1 and 3. Thus, since a gingiva enters into the clearance G, invading of saliva or bacteria into the dental implant fixture 1 side along a composite crown, which is a dental prosthesis, can be prevented by the gingiva entered into the clearance G. Accordingly, since there is no portion as a hotbed of invaded bacteria or the like, an implant body is not finally dropped.

The clearance G for a gingiva to enter is a small clearance having a maximum height of 1.3 mm or less in the axial direction of the dental implant fixture 1, and having a depth in the direction rectangular to the axis of the dental implant fixture 1 being equivalent to a length from the outer periphery of the intra-oral side end of the dental implant fixture 1 to the outer peripheral surface of the abutment 2 at the intra-oral side end of the dental implant fixture 1, and is formed so as to make a gingiva contact at least with the intra-oral side end of the dental implant fixture 1 and the dental implant side end of the abutment coping 3 for a dental implant fixture according to the present invention, whereby a gingiva can readily enter into the clearance G in a comparatively short time when it grows.

Further, the abutment coping 3 for a dental implant fixture according to the present invention made up of a white ceramic having a comparatively similar color tone to that of a natural tooth. Thus, aesthetic property is not lost by exposure of a material different from a dental prosthesis such as a metallic abutment, at the gingival side during a period before recovery of a gingiva to the healthy state, between interdental papillae, or at the gingival side at the time of peeling of a gingiva.

Such an effect can be remarkably exercised in the embodiment of the abutment coping 3 for a dental implant fixture according to the present invention that the externally attached crown has a portion to be the margin line 3a for a dental externally attached crown at a part at the intra-oral side, which is apart from the intra-oral side surface of the dental implant fixture 1 by a distance corresponding to a gingiva, rather than the embodiment that an externally attached crown of a composite crown as a dental prosthesis starts from an end of the intra-oral side of the dental implant fixture 1.

## Claims

1. An abutment coping for a dental implant fixture, with the structure that the abutment coping is provided and fixed to an abutment having a male screw engaged to a female screw formed at the intra-oral side of a dental implant fixture and being cylindrically or taperedly projected at the intra-oral side of the dental implant fixture,
wherein an end part of the abutment coping at the dental implant fixture side is made of a white ceramic and fixed at the abutment so as to expose an outer peripheral surface of the abutment at a part between the end part and the intra-oral side surface of the dental implant fixture, or to have a clearance being 1.3 mm or less and starting from an outer peripheral surface of the abutment at a part between the end part and the intra-oral side surface of the dental implant fixture.

2. The abutment coping for a dental implant fixture as claimed in claim 1,
wherein the abutment coping has a portion to be a margin line for a dental externally attached crown at the intra-oral side, which is apart from the intra-oral side surface of the dental implant fixture by a distance corresponding to a gingiva.
